# EUROPEAN PATENT SPECIFICATION

(11) **EP 3 488 376 B1**
(45) Date of publication and mention of the grant of the patent: **25.12.2019**
(21) Application number: 17780937.3
(22) Date of filing: 21.09.2017
(51) Int. Cl.: G06F 21/62, H04L 29/06, G06F 21/60

(54) **CONDITIONAL PROVISION OF ACCESS BY INTERACTIVE ASSISTANT MODULES**
BEDINGTER ZUGANG DURCH EIN INTERAKTIVES ASSISTENZMODULE
ACCÈS CONDITIONNEL PAR DES MODULES ASSISTANTS INTERACTIFS

(30) Priority: 20.12.2016 US 201615385227
(43) Date of publication of application: 29.05.2019
(73) Proprietor: Google LLC, Mountain View, CA 94043 (US)
(72) Inventor: MERTENS, Timo, Mountain View, California 94043 (US); KOLAK, Okan, Mountain View, California 94043 (US)
(74) Representative: Thorniley, Peter
(86) International application number: PCT/US2017/052709
(87) International publication number: WO 2018/118164

(56) References cited:
- US-A1- 2004 117 371
- US-A1- 2006 253 456
- US-A1- 2016 212 138

## Description

### Background

Interactive assistant modules currently implemented on computing devices such as smart phones, tablets, smart watches, and standalone smart speakers typically are configured to respond to whomever provides speech input to the computing device. Some interactive assistant modules may even respond to speech input that originated (*i.e*., was input) at a remote computing device and then was transmitted over one or more networks to the computing device operating the interactive assistant module.

United States patent application US2004/0117371 describes relates to the execution of event-based database access requests and proposes that authorization privileges are inferred for an access request when no explicit privilege exists.

### Summary

The invention is defined in the appended claims.

This specification describes solutions to the technical problem of managing security in computer-implemented processes carried out by interactive assistant modules. It is generally directed to various techniques for automatically permitting interactive assistant modules to provide requesting users with access to resources controlled by other users (so-called "controlling users"), with or without prompting the controlling users first. These resources may include but are not limited to content (*e.g*., documents, schedules, reminders, data), communication channels (*e.g*., telephone, text, videoconference, *etc*.)*,* signals (*e.g*., current location, trajectory, activity), and so forth. This automatic permission granting may be accomplished in various ways.

In various implementations, interactive assistant modules may conditionally assume permission to provide a first user (*i.e.* a requesting user) with access to a resource controlled by a second user (*i.e.* a controlling user) based on a comparison of a relationship between the first and second users with one or more relationships between the second user and one or more other users. In some implementations, the interactive assistant module may assume that the first user should have similar access to resources controlled by the second user as other users who have similar relationships (*i.e.* relationships sharing one or more attributes) with the second user as the first user. For example, suppose the second user permits the interactive assistant module to provide one colleague of the second user with access to a particular set of resources. The interactive assistant may assume that it is permitted to provide access to similar resources to another colleague of the second user that has a similar relationship with the second user.

In some implementations, attributes of relationships that may be considered by the interactive assistant module may include sets of permissions granted to particular users. Suppose the interactive assistant has access to a first set of permissions associated with a requesting user (who has requested access to a resource controlled by a controlling user), and that each permission of the first set permits the interactive assistant module to provide the requesting user access to a resource controlled by the controlling user. In various implementations, the interactive assistant module may compare this first set of permissions with set(s) of permissions associated with other user(s). The other users may include users for whom the interactive assistant module has prior permission to provide access to the resource requested by the requesting user. If the first set of permissions associated with the requesting user is sufficiently similar to one or more sets of permissions associated with the other users, the interactive assistant module may assume it has permission to provide the requesting user access to the requested resource.

In various implementations, various features (*e.g*., permissions granted for or by the user, location, *etc*.) of a controlling user's contacts may be extracted to form a feature vector for each contact. Similarly, a feature vector may be formed based on features associated with (e.g., extracted from content data) the requesting user. Various machine learning techniques, such as embedding, *etc*., may then be employed by the interactive assistant module to determine, for instance, distances between the various feature vectors. These distances may then be used as characterizations of relationships between the corresponding users. For example, a first distance between the requesting user's vector and the controlling user's vector (*e.g*., in a reduced dimensionality space) may be compared to a second distance between the controlling user's vector and a vector of another user for whom the interactive assistant module has prior permission to provide access to the requested resource. If the two distances are sufficiently similar, or if the first distance is less than the second distance (implying a closer relationship), the interactive assistant module may assume that it is permitted to provide the requesting user access to the requested resource.

The "permissions" mentioned above may come in various forms. In some implementations, the permissions may include, for instance, permissions for the interactive assistant module to provide the requesting user access to content controlled by the controlling user, such as documents, reminders, to-do lists, *etc*., *e.g*., for viewing, modification, etc. Additionally or alternatively, the permissions may include permissions for the interactive assistant module to provide the requesting user access to communication channels, current location (*e.g*., as provided by a position coordinate sensor of the controlling user's mobile device), data associated with the controlling user's social network profile, personal information of the controlling user, accounts of the controlling user, and so forth. In some implementations, the permissions may include permissions associated with third party applications, such as permission granted by users to ride sharing applications (*e.g.*, permission to access a user's current location), social networking applications (*e.g.*, permission for application to access photos/location, tag each other in photos), and so forth.

Various other approaches may be used by interactive assistant modules to determine whether to assume permission to provide a requesting user with access to a resource controlled by a controlling user. For example, in some implementations, a controlling user may establish (or an interactive assistant module may establish automatically over time via learning) a plurality of so-called "trust levels." Each trust level may include a set of members (*i.e.* contacts of the controlling user, social media connections, etc.) and a set of permissions that the interactive assistant has with respect to the members.

In some implementations, a requesting user may gain membership in a given trust level of a controlling user by satisfying one or more criteria. These criteria may include but are not limited to having sufficient interactions with the controlling user, having sufficient amounts of shared content (*e.g*., documents, schedule information), being manually added to the trust level by the controlling user, and so forth. When a requesting user requests access to a resource controlled by a controlling user, the interactive assistant module may determine (i) which trust levels, if any, permit the interactive assistant module to provide access to the requested resource, and (ii) whether the requesting user is a member of any of the determined trust levels. Based on the outcome of these determinations, the interactive assistant module may provide the requesting user access to the requested resource.

Therefore, in some implementations, a method may include: receiving, by an interactive assistant module operated by one or more processors, a request by a first user for access to a given resource controlled by a second user, wherein the interactive assistant module lacks prior permission to provide the first user access to the given resource; determining, by the interactive assistant module, one or more attributes of a first relationship between the first and second users; determining, by the interactive assistant module, one or more attributes of one or more other relationships between the second user and one or more other users, wherein the interactive assistant module has prior permission to provide the one or more other users access to the given resource; comparing, by the interactive assistant module, the one or more attributes of the first relationship with the one or more attributes of the one or more other relationships; conditionally assuming, by the interactive assistant module, based on the comparing, permission to provide the first user access to the given resource; and based on the conditionally assuming, providing, by the interactive assistant module, the first user access to the given resource.

In various implementations, determining the one or more attributes of the first relationship may include: identifying, by the interactive assistant module, a first set of one or more permissions associated with the first user; wherein each permission of the first set permits the interactive assistant module to provide the first user access to a resource controlled by the second user.

In various implementations, determining the one or more attributes of the one or more other relationships may include: identifying, by the interactive assistant module, one or more additional sets of one or more permissions associated with the one or more other users; wherein each set of the one or more additional sets is associated with a different user of the one or more other users; and wherein each permission of each additional set permits the interactive assistant module to provide a user associated with the additional set with access to a resource associated with the permission.

In various implementations, the comparing may include comparing, by the interactive assistant module, the first set with each of the one or more additional sets.

In various implementations, at least one permission of the first set or of one or more of the additional sets may be associated with a third party application.

In various implementations, the method may further include providing, by the interactive assistant module, via one or more output devices, output soliciting the second user for permission to provide the first user access to the given resource, wherein the conditionally assuming is further based on a response to the solicitation provided by the second user. In various implementations, the resource may include data controlled by the second user.

In various implementations, the resource may include a voice communication channel between the first user and the second user.

In various implementations, determining the one or more attributes of the first relationship and the one or more other relationships may include: forming a plurality of feature vectors that represent attributes of the first user, the second user, and the one or more other users; and determining distances between at least some of the plurality of feature vectors using one or more machine learning models; wherein a distance between any given pair of the plurality of feature vectors represents a relationship between two users represented by the given pair of feature vectors.

In another aspect, a method may include: receiving, by an interactive assistant module, a request by a first user for access to a given resource controlled by a second user, wherein the interactive assistant module lacks prior permission to provide the first user access to the given resource; determining, by the interactive assistant module, a trust level associated with the first user, wherein the level of trust is inferred by the interactive assistant module based on one or more attributes of a relationship between the first and second users; identifying, by the interactive assistant module, one or more criteria governing resources controlled by the second user that are accessible to other users associated with the trust level; and providing, by the interactive assistant module, the first user access to the given resource in response to a determination that the request satisfies the one or more criteria.

In addition, some implementations include an apparatus including memory and one or more processors operable to execute instructions stored in the memory, where the instructions are configured to perform any of the aforementioned methods. Some implementations also include a non-transitory computer readable storage medium storing computer instructions executable by one or more processors to perform any of the aforementioned methods.

It should be appreciated that all combinations of the foregoing concepts and additional concepts described in greater detail herein are contemplated as being part of the subject matter disclosed herein. For example, all combinations of claimed subject matter appearing at the end of this disclosure are contemplated as being part of the subject matter disclosed herein.

### Brief Description of the Drawings

Fig. 1 illustrates an example architecture of a computer system.
Fig. 2 is a block diagram of an example distributed voice input processing environment.
Fig. 3 is a flowchart illustrating an example method of processing a voice input using the environment of Fig. 2.
Fig. 4 illustrates an example of how disclosed techniques may be practiced, in accordance with various implementations.
Fig. 5 depicts one example of a graphical user interface that may be rendered in accordance with various implementations.
Fig. 6 is a flowchart illustrating an example method in accordance with various implementations.

### Detailed Description

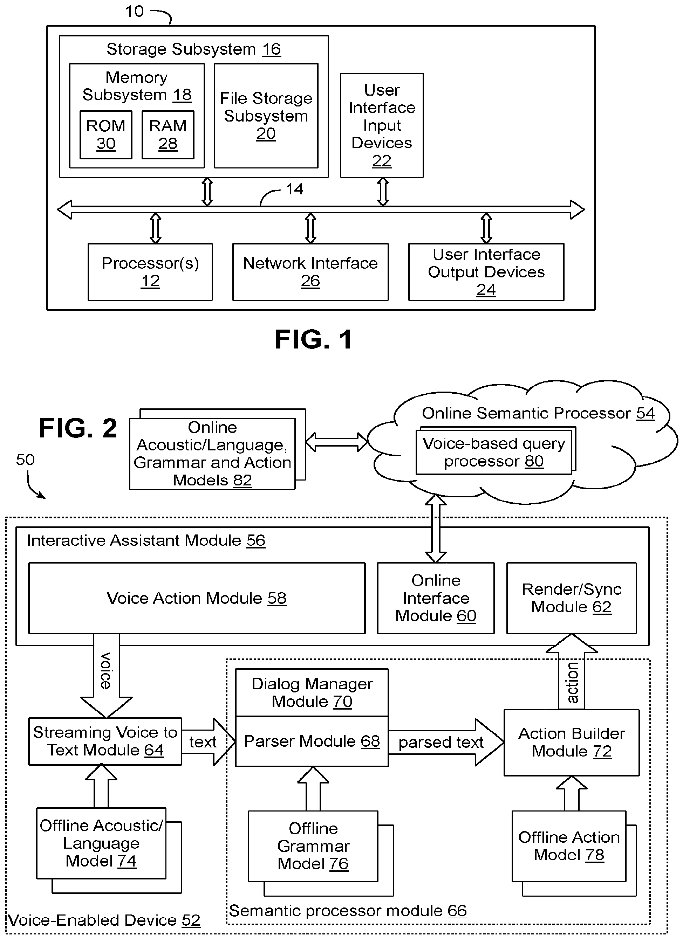

Now turning to the drawings, wherein like numbers denote like parts throughout the several views, Fig. 1 is a block diagram of electronic components in an example computer system 10. System 10 typically includes at least one processor 12 that communicates with a number of peripheral devices via bus subsystem 14. These peripheral devices may include a storage subsystem 16, including, for example, a memory subsystem 18 and a file storage subsystem 20, user interface input devices 22, user interface output devices 24, and a network interface subsystem 26. The input and output devices allow user interaction with system 10. Network interface subsystem 26 provides an interface to outside networks and is coupled to corresponding interface devices in other computer systems.

In some implementations, user interface input devices 22 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into computer system 10 or onto a communication network.

User interface output devices 24 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computer system 10 to the user or to another machine or computer system.

Storage subsystem 16 stores programming and data constructs that provide the functionality of some or all of the modules described herein. For example, the storage subsystem 16 may include the logic to perform selected aspects of the methods disclosed hereinafter.

These software modules are generally executed by processor 12 alone or in combination with other processors. Memory subsystem 18 used in storage subsystem 16 may include a number of memories including a main random access memory (RAM) 28 for storage of instructions and data during program execution and a read only memory (ROM) 30 in which fixed instructions are stored. A file storage subsystem 20 may provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 20 in the storage subsystem 16, or in other machines accessible by the processor(s) 12.

Bus subsystem 14 provides a mechanism for allowing the various components and subsystems of system 10 to communicate with each other as intended. Although bus subsystem 14 is shown schematically as a single bus, alternative implementations of the bus subsystem may use multiple busses.

System 10 may be of varying types including a mobile device, a portable electronic device, an embedded device, a desktop computer, a laptop computer, a tablet computer, a standalone voice-activated product (*e.g*., a smart speaker), a wearable device, a workstation, a server, a computing cluster, a blade server, a server farm, or any other data processing system or computing device. In addition, functionality implemented by system 10 may be distributed among multiple systems interconnected with one another over one or more networks, e.g., in a client-server, peer-to-peer, or other networking arrangement. Due to the ever-changing nature of computers and networks, the description of system 10 depicted in Fig. 1 is intended only as a specific example for purposes of illustrating some implementations. Many other configurations of system 10 are possible having more or fewer components than the computer system depicted in Fig. 1.

Implementations discussed hereinafter may include one or more methods implementing various combinations of the functionality disclosed herein. Other implementations may include a non-transitory computer readable storage medium storing instructions executable by a processor to perform a method such as one or more of the methods described herein. Still other implementations may include an apparatus including memory and one or more processors operable to execute instructions, stored in the memory, to perform a method such as one or more of the methods described herein.

Various program code described hereinafter may be identified based upon the application within which it is implemented in a specific implementation. However, it should be appreciated that any particular program nomenclature that follows is used merely for convenience. Furthermore, given the endless number of manners in which computer programs may be organized into routines, procedures, methods, modules, objects, and the like, as well as the various manners in which program functionality may be allocated among various software layers that are resident within a typical computer (*e.g*., operating systems, libraries, API's, applications, applets, *etc*.), it should be appreciated that some implementations may not be limited to the specific organization and allocation of program functionality described herein.

Furthermore, it will be appreciated that the various operations described herein that may be performed by any program code, or performed in any routines, workflows, or the like, may be combined, split, reordered, omitted, performed sequentially or in parallel and/or supplemented with other techniques, and therefore, some implementations are not limited to the particular sequences of operations described herein.

Fig. 2 illustrates an example distributed voice input processing environment 50, *e.g*., for use with a voice-enabled device 52 in communication with an online service such as online semantic processor 54. In the implementations discussed hereinafter, for example, voice-enabled device 52 is described as a mobile device such as a cellular phone or tablet computer. Other implementations may utilize a wide variety of other voice-enabled devices, however, so the references hereinafter to mobile devices are merely for the purpose of simplifying the discussion hereinafter. Countless other types of voice-enabled devices may use the herein-described functionality, including, for example, laptop computers, watches, head-mounted devices, virtual or augmented reality devices, other wearable devices, audio/video systems, navigation systems, automotive and other vehicular systems, etc.

Online semantic processor 54 in some implementations may be implemented as a cloud-based service employing a cloud infrastructure, *e.g*., using a server farm or cluster of high performance computers running software suitable for handling high volumes of declarations from multiple users. Online semantic processor 54 may not be limited to voice-based declarations, and may also be capable of handling other types of declarations, e.g., text-based declarations, image-based declarations, *etc*. In some implementations, online semantic processor 54 may handle voice-based declarations such as setting alarms or reminders, managing lists, initiating communications with other users via phone, text, email, *etc*., or performing other actions that may be initiated via voice input.

In the implementation of Fig. 2, voice input received by voice-enabled device 52 is processed by a voice-enabled application (or "app"), which in Fig. 2 takes the form of an interactive assistant module 56. In other implementations, voice input may be handled within an operating system or firmware of voice-enabled device 52. Interactive assistant module 56 in the illustrated implementation includes a voice action module 58, online interface module 60 and render/synchronization module 62. Voice action module 58 receives voice input directed to interactive assistant module 56 and coordinates the analysis of the voice input and performance of one or more actions for a user of the voice-enabled device 52. Online interface module 60 provides an interface with online semantic processor 54, including forwarding voice input to online semantic processor 54 and receiving responses thereto. Render/synchronization module 62 manages the rendering of a response to a user, *e.g*., via a visual display, spoken audio, or other feedback interface suitable for a particular voice-enabled device. In addition, in some implementations, module 62 also handles synchronization with online semantic processor 54, *e.g.*, whenever a response or action affects data maintained for the user in the online search service (*e.g*., where voice input requests creation of an appointment that is maintained in a cloud-based calendar).

Interactive assistant module 56 may rely on various middleware, framework, operating system and/or firmware modules to handle voice input, including, for example, a streaming voice to text module 64 and a semantic processor module 66 including a parser module 68, dialog manager module 70 and action builder module 72.

Module 64 receives an audio recording of voice input, *e.g*., in the form of digital audio data, and converts the digital audio data into one or more text words or phrases (also referred to herein as "tokens"). In the illustrated implementation, module 64 is also a streaming module, such that voice input is converted to text on a token-by-token basis and in real time or near-real time, such that tokens may be output from module 64 effectively concurrently with a user's speech, and thus prior to a user enunciating a complete spoken declaration. Module 64 may rely on one or more locally-stored offline acoustic and/or language models 74, which together model a relationship between an audio signal and phonetic units in a language, along with word sequences in the language. In some implementations, a single model 74 may be used, while in other implementations, multiple models may be supported, *e.g*., to support multiple languages, multiple speakers, *etc.*

Whereas module 64 converts speech to text, module 66 attempts to discern the semantics or meaning of the text output by module 64 for the purpose or formulating an appropriate response. Parser module 68, for example, relies on one or more offline grammar models 76 to map text to particular actions and to identify attributes that constrain the performance of such actions, *e.g*., input variables to such actions. In some implementations, a single model 76 may be used, while in other implementations, multiple models may be supported, *e.g*., to support different actions or action domains (*i.e*., collections of related actions such as communication-related actions, search-related actions, audio/visual-related actions, calendar-related actions, device control-related actions, *etc*.)

As an example, an offline grammar model 76 may support an action such as "set a reminder" having a reminder type parameter that specifies what type of reminder to set, an item parameter that specifies one or more items associated with the reminder, and a time parameter that specifies a time to activate the reminder and remind the user. Parser module 68 may receive a sequence of tokens such as "remind me to," "pick up," "bread," and "after work" and map the sequence of tokens to the action of setting a reminder with the reminder type parameter set to "shopping reminder," the item parameter set to "bread" and the time parameter of "5:00pm,", such that at 5:00pm that day the user receives a reminder to "buy bread."

Parser module 68 may also work in conjunction with a dialog manager module 70 that manages a dialog with a user. A dialog, within this context, refers to a set of voice inputs and responses similar to a conversation between two individuals. Module 70 therefore maintains a "state" of a dialog to enable information obtained from a user in a prior voice input to be used when handling subsequent voice inputs. Thus, for example, if a user were to say "remind me to pick up bread," a response could be generated to say "ok, when would you like to be reminded?" so that a subsequent voice input of "after work" would be tied back to the original request to create the reminder. In some implementations, module 70 may be implemented as part of interactive assistant module 56.

Action builder module 72 receives the parsed text from parser module 68, representing a voice input interpretation and generates one or more responsive actions or "tasks" along with any associated parameters for processing by module 62 of interactive assistant module 56. Action builder module 72 may rely on one or more offline action models 78 that incorporate various rules for creating actions from parsed text. It will be appreciated that some parameters may be directly received as voice input, while some parameters may be determined in other manners, *e.g*., based upon a user's location, demographic information, or based upon other information particular to a user. For example, if a user were to say "remind me to pick up bread at the grocery store," a location parameter may not be determinable without additional information such as the user's current location, the user's known route between work and home, the user's regular grocery store, *etc*.

It will be appreciated that in some implementations, models 74, 76 and 78 may be combined into fewer models or split into additional models, as may be functionality of modules 64, 68, 70 and 72. Moreover, models 74-78 are referred to herein as offline models insofar as the models are stored locally on voice-enabled device 52 and are thus accessible offline, when device 52 is not in communication with online semantic processor 54. Moreover, while module 56 is described herein as being an interactive assistant module, that is not meant to be limiting. In various implementations, any type of app operating on voice-enabled device 52 may perform techniques described herein for automatically permitting interactive assistant modules to provide requesting users with access to resources controlled by other users (so-called "controlling users"), with or without prompting the controlling users first.

In various implementations, online semantic processor 54 may include complementary functionality for handling voice input, *e.g*., using a voice-based query processor 80 that relies on various acoustic/language, grammar and/or action models 82. It will be appreciated that in some implementations, particularly when voice-enabled device 52 is a resource-constrained device, voice-based query processor 80 and models 82 used thereby may implement more complex and computational resource-intensive voice processing functionality than is local to voice-enabled device 52.

In some implementations, multiple voice-based query processors 80 may be employed, each acting as an online counterpart for one or more individual interactive assistant modules 56. For example, in some implementations, each device in a user's ecosystem may be configured to operate an instance of an interactive assistant module 56 that is associated with the user (*e.g*., configured with the user's preferences, associated with the same interaction history, *etc*.). A single, user-centric online instance of voice-based query processor 80 may be accessible to each of these multiple instances of interactive assistant module 56, depending on which device the user is operating at the time.

In some implementations, both online and offline functionality may be supported, *e.g*., such that online functionality is used whenever a device is in communication with an online service, while offline functionality is used when no connectivity exists. In other implementations different actions or action domains may be allocated to online and offline functionality, and while in still other implementations, online functionality may be used only when offline functionality fails to adequately handle a particular voice input. In other implementations, however, no complementary online functionality may be used.

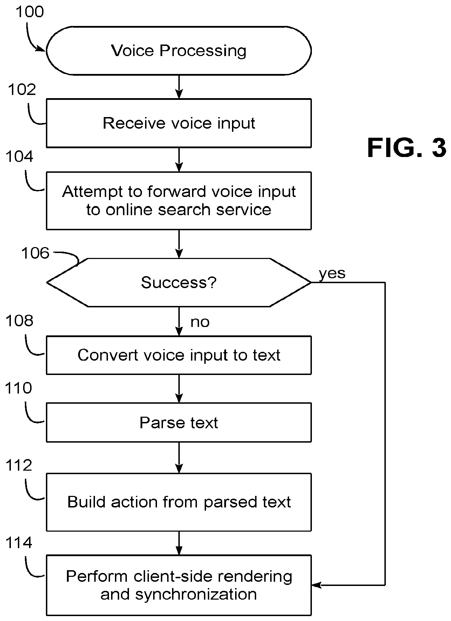

Fig. 3, for example, illustrates a voice processing routine 100 that may be executed by voice-enabled device 52 to handle a voice input. Routine 100 begins in block 102 by receiving voice input, *e.g*., in the form of a digital audio signal. In this implementation, an initial attempt is made to forward the voice input to the online search service (block 104). If unsuccessful, *e.g*., due to a lack of connectivity or a lack of a response from the online search service, block 106 passes control to block 108 to convert the voice input to text tokens (block 108, *e.g*., using module 64 of Fig. 2), parse the text tokens (block 110, *e.g*., using module 68 of Fig. 2), and build an action from the parsed text (block 112, e.g., using module 72 of Fig. 2). The resulting action is then used to perform client-side rendering and synchronization (block 114, *e.g*., using module 62 of Fig. 2), and processing of the voice input is complete.

Returning to block 106, if the attempt to forward the voice input to the online search service is successful, block 106 bypasses blocks 108-112 and passes control directly to block 114 to perform client-side rendering and synchronization. Processing of the voice input is then complete. It will be appreciated that in other implementations, as noted above, offline processing may be attempted prior to online processing, *e.g*., to avoid unnecessary data communications when a voice input can be handled locally.

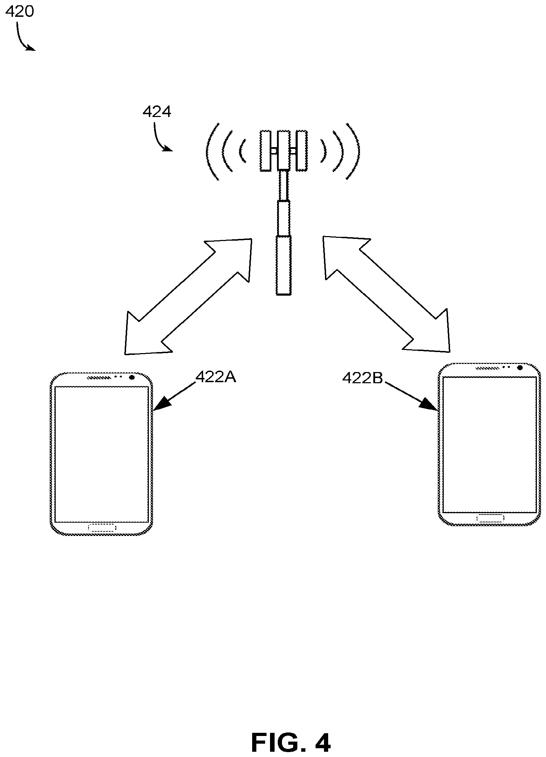

Fig. 4 schematically demonstrates an example scenario 420 of how interactive assistant module 56, alone or in conjunction with a counterpart online voice-based processor 80, may automatically infer or conditionally assume permission to provide requesting users with access to resources controlled by other users (so-called "controlling users"), with or without seeking permission from the controlling users first. In this example, a first mobile phone 422A is operated by a first user (not depicted) and a second mobile phone 422B is operated by a second user (not depicted).

Suppose the first user has configured first mobile phone 422A to reject incoming phone calls unless certain criteria are met. For example, the first user may be currently using first mobile phone 422A in a phone call with someone else, may be using first mobile phone 422A to video conference with someone else, or otherwise may have set first mobile phone 422A to a "do not disturb" setting. Suppose further that the second user has operated second mobile phone 422B to place a call to first mobile phone 422A, *e.g*., via one or more cellular towers 424.

In various implementations, an interactive assistant module (*e.g*., 56 described above) operating on first mobile phone 422A, or elsewhere on behalf of first mobile phone 422A and/or the first user, may detect the incoming call and interpret it as a request by the second user for access to a given resource-namely, a voice communication channel between the first user and the second user-that is controlled by the first user. In some implementations, the interactive assistant module may match the incoming telephone number or other identifier associated with second mobile phone 422B with a contact of the first user, *e.g*., contained in a contact list stored in memory of first mobile phone 422A. The interactive assistant module may then determine that it lacks prior permission to provide the second user access to the voice communication channel between the first and second users.

However, rather than simply rejecting the incoming call, the interactive assistant module may attempt to infer whether the first user would want to receive an incoming call from the second user, even in spite of the first user being currently engaged with someone else or having set first mobile phone 422A to "do not disturb." Accordingly, in various implementations, the interactive assistant module may determine one or more attributes of a first relationship between the first and second users. Additionally, the interactive assistant module may determine one or more attributes of one or more other relationships between the first user and one or more other users besides the second user. In some instances, the interactive assistant module may have prior permission to provide the one or more other users access to a voice communication channel with the first user under the current circumstances.

The interactive assistant module may then compare the one or more attributes of the first relationship between the first and second users with the one or more attributes of the one or more other relationships between the first user and the one or more other users besides the second user. Based on the comparison, the interactive assistant module may conditionally assume (*e.g*., infer, presume) permission to provide the second user access to the voice communication channel with the first user. In some instances, the interactive assistant module may provide output to the first user soliciting confirmation. In other instances, the interactive assistant module may provide the second user access may patch the second user's incoming call to first mobile phone 422A without seeking confirmation first. For example, the first user may receive notification on first mobile phone 422A that he or she has an incoming call (*e.g*., call waiting) that he or she may choose to accept. Additionally or alternatively, the interactive assistant module may automatically add the second user to an existing call session that the first user is engaged in using first mobile phone 422A, *e.g*., as part of a multi-party conference call.

In some implementations, the interactive assistant module may presume permission to grant the second user access to the resource (voice communication channel with the first user) based on the nature of the relationship between the first and second users. Suppose the first user and second user are part of the same immediate family, and that the first user previously granted the interactive assistant module operating on first mobile phone 422A (and/or other devices of an ecosystem of devices operated by the first user) permission to patch through incoming phone calls from another immediate family member. The interactive assistant module may assume that, because the first user previously granted another immediately family member permission to be patched through, the second user should also be patched through because the second user is also a member of the first user's immediate family.

In other implementations, the interactive assistant module may use different techniques to compare the relationship between the first and second users to relationships between the first user and others. For example, in some implementations, the interactive assistant module may form a plurality of feature vectors, with one feature vector representing attributes of the first user, another feature vector representing attributes of the second user, and one or more additional feature vectors that represent, respectively, one or more other users having relationships with the first user (and permission to patch through calls). In some such implementations, the interactive assistant module may form these feature vectors from a contact list, social network profile (*e.g*., list of "friends"), and/or other similar contact sources associated with the first user. Features that may be extracted from each contact of the first user for inclusion in a respective feature vector may include, but are not limited to, an explicit designation of a relationship between the first user and the contact (*e.g*., "spouse," "sibling," "parent," "cousin," "co-worker," "friend," "classmate," "acquaintance," *etc*.), a number of contacts shared between the first user and the contact, an interaction history between the first user and the contact (*e.g*., call history/frequency, text history/frequency, shared calendar appointments, *etc*.), demographics of the contact (*e.g.*, age, gender, address), permissions granted to the interactive assistant to provide the contact access to various resources controlled by the first user, and so forth.

The interactive assistant module may then determine "distances" between at least some of the plurality of feature vectors, *e.g.,* using one or more machine learning models (*e.g*., logistical regression), embedding in reduced dimensionality space, and so forth. In some implementations, a machine learning classifier or model may be trained using labeled training data such as pairs of feature vectors labeled with a relationship measure (or distance) between the two individuals represented by the respective feature vectors. For example, a pair of feature vectors may be generated for a corresponding pair of co-workers. The pair of feature vectors may be labeled with some indication of a relationship between the co-workers, such as a numeric value (*e.g*., a scale of 0.0-1.0, with 0.0 representing the closest possible relationship (or distance) and 1.0 representing no relationship) or an enumerated relationship (*e.g*., "immediately family," "extended family," "spouse," "offspring," "sibling," "cousin," "colleague," "co-worker," *etc*.), which in this example may be "co-worker." This labeled pair, along with any number of other labeled pairs, may be used to train the machine learning classifier to classify relationships between feature vector pairs representing pairs of individuals. In other implementations, features of each feature vector may be embedded in an embedding space, and distances between the features' respective embeddings may be determined, *e.g*., using the dot product, cosine similarity, Euclidian distance, *etc*.

However distances between feature vectors are determined, a distance between any given pair of the plurality of feature vectors may represent a relationship between two users represented by the given pair of feature vectors. The closer the distance, the stronger the relationship, and vice versa. Suppose the relationship between feature vectors representing the first and second users is represented by a shorter distance than another relationship between the first user and another user. Suppose further that the interactive assistant module has permission to patch the other user's calls through to the first user. In such a circumstance, the interactive assistant module may presume that it has permission to patch the second user through as well.

In yet other implementations, the interactive assistant module may compare relationships using permissions granted to the interactive assistant module to provide various users with access to various resources controlled by the first user. For example, in some implementations, the interactive assistant module may identify a first set of one or more permissions associated with the second user. Each permission of the first set may permit the interactive assistant module to provide the second user access to a resource controlled by the first user. Additionally, the interactive assistant module may identify one or more additional sets of one or more permissions associated with the one or more other users. Each set of the one or more additional sets may be associated with a different user of the one or more other users. Additionally, each permission of each additional set may permit the interactive assistant module to provide a user associated with the additional set with access to a resource controlled by the first user. Then, the interactive assistant module may compare the first set with each of the one or more additional sets. If the first set of permissions associated with the second user is sufficiently similar to a set of permissions associated with another user for which the interactive assistant module has prior permission to patch calls through to the first user, then the interactive assistant module may presume that it has permission to patch the second user's call through to the first user.

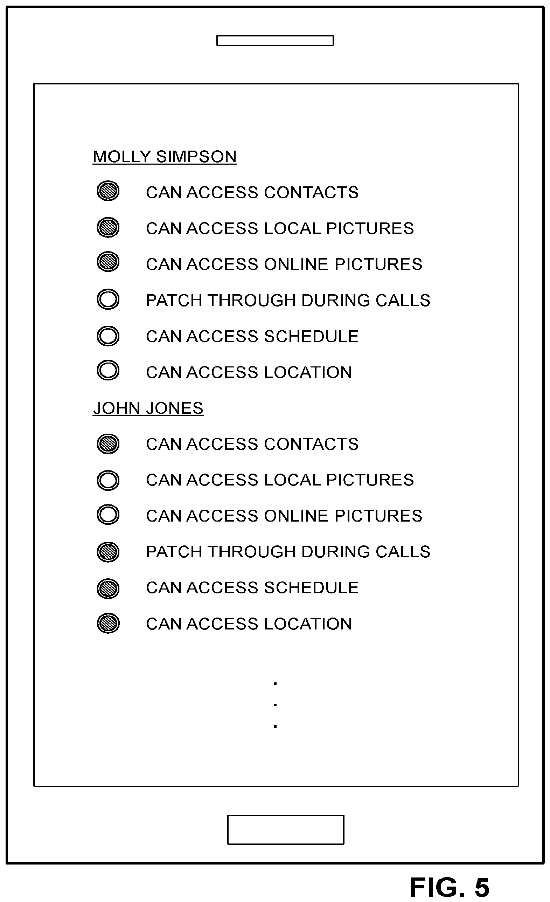

Fig. 5 depicts one example of a graphical user interface that may be rendered, *e.g*., by first mobile phone 422A, that shows an example of sets of permissions granted to two contacts of the first user: Molly Simpson and John Jones. In some implementations, the first user may operate such a graphical user interface to set permissions for various contacts, although this is not required. In this example, the interactive assistant module has permission to provide Molly Simpson with access to the first user's contacts, local pictures (*e.g*., pictures stored in local memory of first mobile phone 422A and/or another device of the first user's ecosystem of devices), and online pictures (*e.g*., pictures the first user has stored on the cloud). Likewise, the interactive assistant module has permission to provide John Jones with access to the first user's contacts, to patch calls from John Jones through to the first user, to provide John Jones with access to the first user's schedule, and to the first user's current location (*e.g*., determined by a position coordinate sensor of first mobile phone 422A and/or another device of an ecosystem of devices operated by the first user). Of course, the first user may have any number of additional contacts for which permissions are not depicted in Fig. 4; the depicted contacts and associated permissions are for illustrative purposes only.

Continuing with the scenario described above with respect to Fig. 4, when deciding whether to patch the second user's incoming call through to the first user, the interactive assistant module may compare its permissions vis-à-vis the second user to its permissions vis-à-vis each contact of the first user, including Molly Simpson and John Jones. Suppose the permission set associated with the second user is most similar to those associated with Molly Simpson (*e.g*., both can be provided access to the first user's contacts, local, and online pictures). The interactive assistant module does not have permission to patch incoming calls from Molly Simpson through to the first user. Accordingly, the interactive assistant module may not presume to have permission to patch the second user's incoming call through, either.

However, suppose the permission set associated with the second user is most similar to those associated with John Jones (*e.g*., both can be provided access to the first user's contacts, schedule, and location). The interactive assistant module also has prior permission to patch incoming calls from John Jones through to the first user. Accordingly, the interactive assistant module may presume to have permission to patch the second user's incoming call through, as well.

In some implementations, "similarity" between contacts' permissions may be determined using machine learning techniques similar to those described above. For example, the aforementioned contact feature vectors may be formed using permissions such as those depicted in Fig. 5. Distances between such feature vectors may be computed by the interactive assistant module (or remotely by one or more servers in network communication with the client device) and used to determine similarity between contacts, and ultimately, to determine whether to permit the second user's incoming call to be patched through to the first user.

In Fig. 5, the permissions associated with each contact are generally permissions that have been granted to an interactive assistant module with regard to those contacts. However, this is not meant to be limiting. In some implementations, the permissions associated with contacts may include other types of permissions, such as permissions associated with third party applications. For example, in some implementations, permissions granted by contacts to applications such as ride sharing applications (*e.g*., to access a user's current location), social networking applications (*e.g*., permission to access a particular group or event, permission to view each other's photos, permission to tag each other in photos, *etc*.), and so forth, may be used to compare contacts. In some implementations, these other permissions may be used simply as data points for comparison of contacts and/or relationships with the controlling user. For example, when feature vectors associated with each contact are generated to determine distances as described above, the third party application permissions may be included as features in the feature vectors.

Various other approaches may be used by interactive assistant modules to determine whether to assume permission to provide a requesting user with access to a resource controlled by a controlling user. For example, in some implementations, a controlling user may establish (or an interactive assistant module may establish automatically over time via learning) a plurality of so-called "trust levels." Each trust level may include a set of members (*i.e.* contacts of the controlling user) and a set of permissions that the interactive assistant has with respect to the members.

A requesting user may gain membership in a given trust level of a controlling user by having a relationship with the controlling user that satisfies one or more criteria. These criteria may include having sufficient interactions with the controlling user, having sufficient amounts of shared content (*e.g*., documents, calendar entries), having a threshold number of shared social networking contacts, being manually added to the trust level by the controlling user, and so forth. When a requesting user requests access to a resource controlled by a controlling user, the interactive assistant module may determine (i) which trust levels, if any, permit the interactive assistant module to provide access to the requested resource, and (ii) whether the requesting user is a member of any of the determined trust levels. Based on the outcome of these determinations, the interactive assistant module may provide the requesting user access to the requested resource.

In some implementations, trust levels may be determined automatically. For example, various contacts of a particular user may be clustered together, *e.g*., in an embedded space, based on various features of those contacts (*e.g*., the permissions and other features described previously). If a sufficient number of contacts are clustered together based on shared features, a trust level may be automatically associated with that cluster. Thus, for instance, contacts with very close relationships with the particular user (*e.g*., based on high numbers of similar permissions, *etc*.) may be grouped into a first cluster that represents a "high" trust level. Contacts with less-close-but-not-insubstantial relationships with the particular user may be grouped into a second cluster that represents a "medium" trust level. Other contacts with relatively weak relationships with the particular user may be grouped into a third cluster that represents a "low" trust level. And so forth.

In some implementations, permissions granted to the interactive assistant module that are found with a threshold frequency in a particular cluster may be assumed for all the contacts in that cluster. For example, suppose the interactive assistant module has permission to share the particular user's current location with 75% of contacts in the high trust level (and that permission has not been denied to the remaining contacts of the cluster). The interactive assistant may assume that all contacts in the high trust level cluster should be provided (upon request) access to the particular user's current location. In various implementations, the particular user may be able to modify permissions associated with various trust levels, add or remove contacts from the trust levels, and so forth, *e.g*., using a graphical user interface. In some implementations, when the particular user adds a new contact, the interactive assistant module may use similar techniques to determine which cluster (and hence, trust level) to which the new contact should be added. In some implementations, the interactive assistant module may prompt the particular user with a suggestion to add the new contact to the trust level first, rather than simply adding the new contact to the trust level automatically. In other implementations, requesting users may be analyzed on the fly, e.g., at the time they request a resource controlled by a controlling user, to determine a suitable trust level.

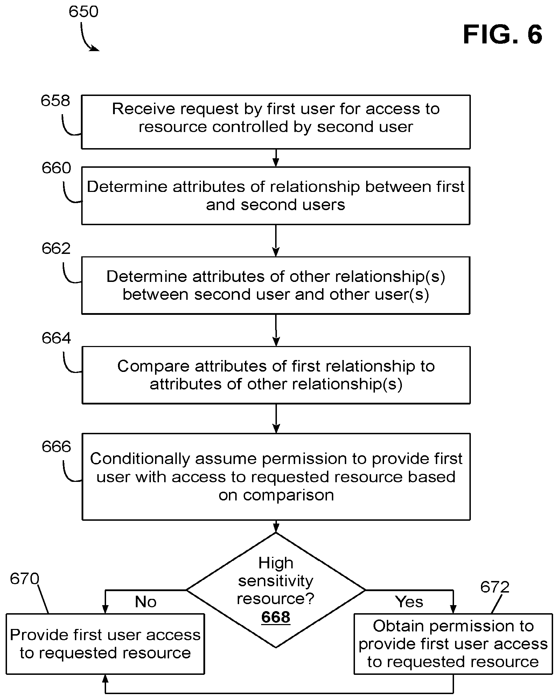

Fig. 6 illustrates a routine 650 suitable for execution by an interactive assistant module to permit the interactive assistant module to provide (with or without first seeking approval) requesting users with access to resources controlled by controlling users, without necessarily prompting the controlling users first. Routine 650 may be executed by the same service that processes voice-based queries, or may be a different service altogether. And while particular operations are depicted in a particular order, this is not meant to be limiting. In various implementations, one or more operations may be added, omitted, or reordered.

At block 658, an interactive assistant module may receive a request from a first user for access to a resource controlled by a second user. For example, the first user may try to call the second user's mobile phone while the second user is already on a call or has placed the mobile phone into "do not disturb" mode. As another example, the first user may request that the interactive assistant module provide access to content controlled by the second user, such as photos, media, documents, *etc*. Additionally or alternatively, the first user may request that the interactive assistant module provide one or more attributes of the second user's context, such as current location, status (*e.g*., social network status), and so forth.

At block 660, the interactive assistant module may determine attributes of a first relationship between the first and second users. A number of example relationship attributes are possible, including but not limited to those described above (*e.g*., permissions granted by the second user to the interactive assistant module (or other general permissions) to provide access to resources controlled by the second user to the first user), shared contacts, frequency of contact between the users (*e.g*., in a single modality such as over the telephone or across multiple modalities), an enumerated relationship classification (*e.g*., spouse, sibling, friend, acquaintance, co-worker, *etc*.), a geographic distance between the first and second users (*e.g*., between their current locations and/or between their home/work addresses), documents shared by the users (*e.g*., a number of documents, types of documents, *etc*.), demographic similarities (*e.g*., age, gender, *etc*.), and so forth.

At block 662, the interactive assistant module may determine one or more attributes of one or more relationships between the second user (*i.e.* the controlling user in this scenario) and one or more other users. At block 664, the attributes of the first relationship may be compared to attributes of the one or more other relationships, *e.g*., using various heuristics, machine learning techniques described above, and so forth. For example, and as was described previously, "distances" between embeddings associated with the various users may be determined in an embedded space.

At block 666, the interactive assistant module may conditionally assume permission to provide the first user with access to the requested resources based on the comparison of block 664. For example, suppose a distance between the first and second users is less than a distance between the second user and another user for which the interactive assistant module has permission to grant access to the requested resource. In such a scenario, the first user likewise may be granted access by the interactive assistant module to the requested resource.

In some implementations, at block 668, the interactive assistant module may determine whether the requested resource is a "high sensitivity" resource. A resource may be deemed high sensitivity if, for instance, the second user affirmatively identifies the resource as such. Additionally or alternatively, the interactive assistant module may examine past instances where the requested resource and/or similar resources were accessed to "learn" whether the resource has a sensitivity measure that satisfies a predetermined threshold. For example, if access to a particular resource was granted automatically (*i.e.* without obtaining the second user's explicit permission first), and the second user later provides feedback indicating that such automatic access should not have been granted, the interactive assistant module may increase a sensitivity level of that particular resource.

As another example, features of the requested resource may be compared to features of other resources known to be high (or low) sensitivity to determine whether the requested resource is high sensitivity. In some implementations, a machine learning model may be trained with training data that includes features of resources that are labeled with various indicia of sensitivity. The machine learning model may then be applied to features of unlabeled resources to determine their sensitivity levels.

In yet other implementations, rules and/or heuristics may be employed to determine a sensitivity level of the requested resource. For example, suppose the requested resource is a document or other resource that contains or allows access to personal and/or confidential information about the second user, such as an address, social security number, account information, *etc*. In such a scenario, the interactive assistant module may classify the requested resource as high sensitivity because it satisfies one or more rules.

If the answer at block 668 is no (*i.e.* the requested resource is not deemed high sensitivity), then method 650 may proceed to block 670. At block 670, the interactive assistant module may provide the first (*i.e.* requesting) user with access to the resource. For example, the interactive assistant module may patch a telephone call from the first user through to the second user. Or the interactive assistant module may provide the first user with requested information, such as the second user's location, status, context, *etc*. In some implementations, the first user may be allowed to modify the resource, such as adding/modifying a calendar entry of the second user, setting a reminder for the second user, and so forth.

However, if the answer at block 668 is yes (*i.e.* the requested resource is deemed high sensitivity), then method 650 may proceed to block 672. A block 672, the interactive assistant module may obtain permission from the second (*i.e*., controlling) user to provide the first user with access to the requested resource. In some implementations, the interactive assistant module may provide output on one or more client devices of the second user's ecosystem of client device that solicits permission from the second user. For example, the second user may receive a pop up notification on his or her smart phone, an audible request on a standalone voice-activated product (*e.g*., a smart speaker) or an in-vehicle computing system, a visual and/or audio request on a smart television, and so forth. Assuming the second user grants the permission, method 650 may then proceed to block 670, described previously.

While several implementations have been described and illustrated herein, a variety of other means and/or structures for performing the function and/or obtaining the results and/or one or more of the advantages described herein may be utilized, and each of such variations and/or modifications is deemed to be within the scope of the implementations described herein. More generally, all parameters, dimensions, materials, and configurations described herein are meant to be exemplary and that the actual parameters, dimensions, materials, and/or configurations will depend upon the specific application or applications for which the teachings is/are used. Those skilled in the art will recognize, or be able to ascertain using no more than routine experimentation, many equivalents to the specific implementations described herein. It is, therefore, to be understood that the foregoing implementations are presented by way of example only and that, within the scope of the appended claims and equivalents thereto, implementations may be practiced otherwise than as specifically described and claimed. Implementations of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the scope of the present disclosure.

## Claims

1. A computer-implemented method, comprising:
receiving, by an interactive assistant module (56) operated by one or more processors, a request by a first user for access to a given resource controlled by a second user, wherein the interactive assistant module lacks prior permission to provide the first user access to the given resource;
determining, by the interactive assistant module (56), one or more attributes of a first relationship between the first and second users, such attributes comprising a first set of one or more permissions associated with the first user, wherein each permission of the first set permits the interactive assistant module (56) to provide the first user access to a resource controlled by the second user;
determining, by the interactive assistant module (56), one or more attributes of one or more other relationships between the second user and one or more other users, such attributes comprising one or more additional sets of one or more permissions associated with the one or more other users, wherein each set of the one or more additional sets is associated with a different user of the one or more other users, wherein each permission of each additional set permits the interactive assistant module (56) to provide a user associated with the additional set with access to a resource associated with the permission, and wherein the interactive assistant module (56) has prior permission to provide the one or more other users access to the given resource;
comparing, by the interactive assistant module (56), the one or more attributes of the first relationship with the one or more attributes of the one or more other relationships;
conditionally assuming, by the interactive assistant module (56), based on the comparing, permission to provide the first user access to the given resource; and
based at least in part on the conditionally assuming, providing, by the interactive assistant module (56), the first user access to the given resource.

2. The computer-implemented method of claim 1, wherein at least one permission of the first set or of one or more of the additional sets is associated with a third party application.

3. The computer-implemented method of any one of the preceding claims, further comprising providing, by the interactive assistant module (56), via one or more output devices (24), output soliciting the second user for permission to provide the first user access to the given resource, wherein the access to the given resource is provided further based on a response to the soliciting, wherein the response is provided by the second user.

4. The computer-implemented method of any one of the preceding claims, wherein the access to the given is provided further based on a sensitivity level of the given resource.

5. The computer-implemented method of any one of the preceding claims, wherein the given resource comprises a voice communication channel between the first user and the second user.

6. The computer-implemented method of any one of the preceding claims, wherein determining the one or more attributes of the first relationship and the one or more other relationships includes:
forming a plurality of feature vectors that represent attributes of the first user, the second user, and the one or more other users; and
determining distances between at least some of the plurality of feature vectors using one or more machine learning models;
wherein a distance between any given pair of the plurality of feature vectors represents a relationship between two users represented by the given pair of feature vectors.

7. A system comprising one or more processors (12) and memory (16) operably coupled with the one or more processors (12), wherein the memory stores instructions that, in response to execution of the instructions by the one or more processors (12), cause the one or more processors (12) to operate an interactive assistant module (56) configured to:
receive a request by a first user for access to a given resource controlled by a second user, wherein the interactive assistant module (56) lacks prior permission to provide the first user access to the given resource;
determine a trust level associated with the first user, wherein the trust level is inferred by the interactive assistant module (56) based on one or more attributes of a relationship between the first and second users, such attributes comprising a first set of one or more permissions associated with the first user, wherein each permission of the first set permits the interactive assistant module (56) to provide the first user access to a resource controlled by the second user;
identify one or more criteria governing resources controlled by the second user that are accessible to other users associated with the trust level; and
provide the first user access to the given resource in response to a determination that the request satisfies the one or more criteria.

8. The system of claim 7, wherein the trust level associated with the first user is inferred based on a first set of one or more permissions associated with the first user; wherein each permission of the first set permits the interactive assistant module (56) to provide the first user access to a resource controlled by the second user.

9. The system of claim 8, wherein the trust level associated with the first user is further inferred based on one or more additional sets of one or more permissions associated with one or more other users, wherein the interactive assistant module (56) has prior permission to provide the one or more other users access to the given resource, and wherein each set of the one or more additional sets is associated with a different user of the one or more other users.

10. The system of claim 9, wherein each permission of each additional set permits the interactive assistant module (56) to provide a user associated with the additional set with access to a resource associated with the permission.

11. The system of claim 10, wherein at least one permission of the first set or of one or more of the additional sets is associated with a third party application.

12. The system of any one of claims 7 to 11, further comprising instructions to cause the interactive assistant module (56) to provide, via one or more output devices (24), output soliciting the second user for permission to provide the first user access to the given resource, wherein the one or more criteria include a response to the solicitation provided by the second user.

13. The system of any one of claims 7 to 12, wherein the given resource comprises data controlled by the second user.

14. The system of any one of claims 7 to 13, wherein the given resource comprises a voice communication channel between the first user and the second user.

15. At least one non-transitory computer-readable medium comprising instructions that, in response to execution of the instructions by one or more processors (12), cause the one or more processors (12) to perform the following operations:
receiving, by an interactive assistant module (56) operated by one or more of the processors, a request by a first user for access to a given resource controlled by a second user, wherein the interactive assistant module lacks prior permission to provide the first user access to the given resource;
determining, by the interactive assistant module (56), one or more attributes of a first relationship between the first and second users, such attributes comprising a first set of one or more permissions associated with the first user, wherein each permission of the first set permits the interactive assistant module (56) to provide the first user access to a resource controlled by the second user;
determining, by the interactive assistant module (56), one or more attributes of one or more other relationships between the second user and one or more other users, such attributes comprising one or more additional sets of one or more permissions associated with the one or more other users, wherein each set of the one or more additional sets is associated with a different user of the one or more other users, wherein each permission of each additional set permits the interactive assistant module (56) to provide a user associated with the additional set with access to a resource associated with the permission, and wherein the interactive assistant module (56) has prior permission to provide the one or more other users access to the given resource;
comparing, by the interactive assistant module (56), the one or more attributes of the first relationship with the one or more attributes of the one or more other relationships; and
based on the comparing, providing, by the interactive assistant module (56), the first user access to the given resource.

## Patentansprüche

1. Rechnerimplementiertes Verfahren, umfassend:
Empfangen, durch ein interaktives Assistenzmodul (56), das von einem oder mehreren Prozessoren ausgeführt wird, einer Anforderung eines ersten Benutzers für den Zugriff auf eine bestimmte Ressource, die von einem zweiten Benutzer kontrolliert wird, wobei dem interaktiven Assistenzmodul eine vorher erteilte Berechtigung fehlt, dem ersten Benutzer Zugriff auf die bestimmte Ressource zu gewähren;
Bestimmen, durch das interaktive Assistenzmodul (56), eines oder mehrerer Attribute einer ersten Beziehung zwischen dem ersten und dem zweiten Benutzer, wobei diese Attribute einen ersten Satz von einem oder mehreren Berechtigungen umfassen, die dem ersten Benutzer zugeordnet sind, wobei jede Berechtigung des ersten Satzes dem interaktiven Assistenzmodul (56) erlaubt, dem ersten Benutzer Zugang zu einer vom zweiten Benutzer kontrollierten Ressource zu gewähren;
Bestimmen, durch das interaktive Assistenzmodul (56), eines oder mehrerer Attribute einer oder mehrerer anderer Beziehungen zwischen dem zweiten Benutzer und einem oder mehreren anderen Benutzern, wobei diese Attribute einen oder mehrere zusätzliche Sätze von einer oder mehreren Berechtigungen umfassen, die einem oder mehreren anderen Benutzern zugeordnet sind, wobei jeder Satz des einen oder der mehreren zusätzlichen Sätze einem anderen Benutzer des einen oder der mehreren anderen Benutzer zugeordnet ist, wobei jede Berechtigung jedes zusätzlichen Satzes es dem interaktiven Assistenzmodul (56) erlaubt, einem Benutzer, der dem zusätzlichen Satz zugeordnet ist, Zugang zu einer Ressource zu gewähren, die der Berechtigung zugeordnet ist, und wobei das interaktive Assistenzmodul (56) über eine vorher erteilte Berechtigung verfügt, dem einen oder mehreren anderen Benutzern Zugang zu der gegebenen Ressource zu gewähren;
Vergleichen, durch das interaktive Assistenzmodul (56), des einen oder der mehreren Attribute der ersten Beziehung mit dem einen oder der mehreren Attributen der einen oder mehreren anderen Beziehungen;
bedingtes Annehmen, durch das interaktive Assistenzmodul (56), basierend auf dem Vergleich, der Berechtigung, dem ersten Benutzer Zugriff auf die angegebene Ressource zu gewähren; und
zumindest teilweise basierend auf dem bedingten Annehmen, Bereitstellen, durch das interaktive Assistenzmodul (56), des ersten Benutzerzugriffs auf die gegebene Ressource.

2. Rechnerimplementiertes Verfahren nach Anspruch 1, wobei mindestens eine Berechtigung des ersten Satzes oder des zusätzlichen einen oder der mehreren Sätze mit einer Anwendung eines Dritten verbunden ist.

3. Rechnerimplementiertes Verfahren nach einem der vorhergehenden Ansprüche, ferner umfassend das Bereitstellen, durch das interaktive Assistenzmodul (56), über eine oder mehrere Ausgabevorrichtungen (24), von Ausgaben, die den zweiten Benutzer um die Berechtigung bitten, dem ersten Benutzer den Zugriff auf die gegebene Ressource zu gewähren, wobei der Zugriff auf die gegebene Ressource weiterhin basierend auf eine Reaktion auf die Aufforderung bereitgestellt wird, wobei die Reaktion von dem zweiten Benutzer bereitgestellt wird.

4. Rechnerimplementiertes Verfahren nach einem der vorhergehenden Ansprüche, wobei der Zugriff auf das Gegebene ferner basierend auf einem Empfindlichkeitsgrad der gegebenen Ressource bereitgestellt wird.

5. Rechnerimplementiertes Verfahren nach einem der vorhergehenden Ansprüche, wobei die gegebene Ressource einen Sprachkommunikationskanal zwischen dem ersten Benutzer und dem zweiten Benutzer umfasst.

6. Rechnerimplementiertes Verfahren nach einem der vorhergehenden Ansprüche, wobei das Bestimmen des einen oder der mehreren Attribute der ersten Beziehung und der einen oder mehreren anderen Beziehungen Folgendes beinhaltet:
Bilden einer Vielzahl von Merkmalsvektoren, die Attribute des ersten Benutzers, des zweiten Benutzers und des einen oder der mehreren anderen Benutzer darstellen; und
Bestimmen von Abständen zwischen mindestens einigen der Vielzahl von Merkmalsvektoren unter Verwendung eines oder mehrerer Modelle des maschinellen Lernens;
wobei ein Abstand zwischen einem beliebigen Paar der Vielzahl von Merkmalsvektoren eine Beziehung zwischen zwei Benutzern darstellt, die durch das gegebene Paar von Merkmalsvektoren dargestellt werden.

7. System, umfassend einen oder mehrere Prozessoren (12) und Speicher (16), der betriebstechnisch mit dem einen oder den mehreren Prozessoren (12) gekoppelt ist, wobei der Speicher Anweisungen speichert, die als Reaktion auf die Ausführung der Anweisungen durch den einen oder die mehreren Prozessoren (12) den einen oder die mehreren Prozessoren (12) dazu zu veranlassen, ein interaktives Assistenzmodul (56) zu betreiben, das für Folgendes konfiguriert ist:
Empfangen einer Anforderung eines ersten Benutzers für den Zugriff auf eine bestimmte Ressource, die von einem zweiten Benutzer kontrolliert wird, wobei dem interaktiven Assistenzmodul (56) eine vorher erteilte Berechtigung fehlt, dem ersten Benutzer Zugriff auf die gegebene Ressource zu gewähren;
Bestimmen eines Vertrauensniveaus, das dem ersten Benutzer zugeordnet ist, wobei das Vertrauensniveau durch das interaktive Assistenzmodul (56), basierend auf einem oder mehreren Attributen einer Beziehung zwischen dem ersten und dem zweiten Benutzer, abgeleitet wird, wobei diese Attribute einen ersten Satz einer oder mehreren Berechtigungen umfassen, die dem ersten Benutzer zugeordnet sind, wobei jede Berechtigung des ersten Satzes dem interaktiven Assistenzmodul (56) erlaubt, dem ersten Benutzer Zugriff auf eine vom zweiten Benutzer kontrollierte Ressource zu gewähren;
ein oder mehrere Kriterien für vom zweiten Benutzer kontrollierte Ressourcen zu identifizieren, die für andere Benutzer, die mit dem Vertrauensniveau verbunden sind, zugänglich sind; und
dem ersten Benutzer Zugriff auf die gegebene Ressource als Reaktion auf eine Feststellung zu gewähren, dass die Anforderung das eine Kriterium oder die mehreren Kriterien erfüllt.

8. System nach Anspruch 7, wobei das dem ersten Benutzer zugeordnete Vertrauensniveau, basierend auf einem ersten Satz einer oder mehreren Berechtigungen, die dem ersten Benutzer zugeordnet sind, abgeleitet wird; wobei jede Berechtigung des ersten Satzes dem interaktiven Assistenzmodul (56) erlaubt, dem ersten Benutzer Zugriff auf eine vom zweiten Benutzer gesteuerte Ressource zu gewähren.

9. System nach Anspruch 8, wobei das dem ersten Benutzer zugeordnete Vertrauensniveau weiterhin, basierend auf einem oder mehreren zusätzlichen Sätzen einer oder mehrerer Berechtigungen, die einem oder mehreren anderen Benutzern zugeordnet sind, abgeleitet wird, wobei das interaktive Assistenzmodul (56) über eine vorher erteilte Berechtigung verfügt, dem einen oder den mehreren anderen Benutzern Zugriff auf die gegebene Ressource zu gewähren, und wobei jeder Satz des einen oder der mehreren zusätzlichen Sätze einem anderen Benutzer des einen oder der mehreren anderen Benutzer zugeordnet ist.

10. System nach Anspruch 9, wobei jede Berechtigung jedes zusätzlichen Satzes das interaktive Assistenzmodul (56) erlaubt, einem mit dem zusätzlichen Satz verbundenen Benutzer Zugriff auf eine mit der Berechtigung verbundene Ressource zu gewähren.

11. System nach Anspruch 10, wobei mindestens eine Berechtigung des ersten Satzes oder eines oder mehrerer der zusätzlichen Sätze mit einer Drittanwendung verbunden ist.

12. System nach einem der Ansprüche 7 bis 11, ferner umfassend Anweisungen, um das interaktive Assistenzmodul (56) zu veranlassen, über eine oder mehrere Ausgabevorrichtungen (24), eine Ausgabe bereitzustellen, die den zweiten Benutzer um die Erlaubnis bittet, dem ersten Benutzer Zugang zu der gegebenen Ressource zu gewähren, wobei das eine Kriterium oder die mehreren Kriterien eine Antwort auf die vom zweiten Benutzer bereitgestellte Aufforderung beinhalten.

13. System nach einem der Ansprüche 7 bis 12, wobei die gegebene Ressource Daten umfasst, die von dem zweiten Benutzer kontrolliert werden.

14. System nach einem der Ansprüche 7 bis 13, wobei die gegebene Ressource einen Sprachkommunikationskanal zwischen dem ersten Benutzer und dem zweiten Benutzer umfasst.

15. Zumindest ein nicht-flüchtiges vom Rechner lesbares Medium, das Anweisungen umfasst, die als Reaktion auf die Ausführung der Anweisungen durch einen oder mehrere Prozessoren (12) den einen oder die mehreren Prozessoren (12) veranlassen, die folgenden Operationen auszuführen:
Empfangen, durch ein interaktives Assistenzmodul (56), das von einem oder mehreren der Prozessoren betrieben wird, einer Anforderung eines ersten Benutzers für den Zugriff auf eine bestimmte Ressource, die von einem zweiten Benutzer kontrolliert wird, wobei dem interaktiven Assistenzmodul eine vorher erteilte Berechtigung fehlt, dem ersten Benutzer den Zugriff auf die bestimmte Ressource zu gewähren;
Bestimmen, durch das interaktive Assistenzmodul (56), eines oder mehrerer Attribute einer ersten Beziehung zwischen dem ersten und dem zweiten Benutzer, wobei diese Attribute einen ersten Satz von einem oder mehreren Berechtigungen umfassen, die dem ersten Benutzer zugeordnet sind, wobei jede Berechtigung des ersten Satzes dem interaktiven Assistenzmodul (56) erlaubt, dem ersten Benutzer Zugang zu einer vom zweiten Benutzer kontrollierten Ressource zu gewähren;
Bestimmen, durch das interaktive Assistenzmodul (56), eines oder mehrerer Attribute einer oder mehrerer anderer Beziehungen zwischen dem zweiten Benutzer und einem oder mehreren anderen Benutzern, wobei diese Attribute einen oder mehrere zusätzliche Sätze von einer oder mehreren Berechtigungen umfassen, die einem oder mehreren anderen Benutzern zugeordnet sind, wobei jeder Satz des einen oder der mehreren zusätzlichen Sätze einem anderen Benutzer des einen oder der mehreren anderen Benutzer zugeordnet ist, wobei jede Berechtigung jedes zusätzlichen Satzes es dem interaktiven Assistenzmodul (56) erlaubt, einem Benutzer, der dem zusätzlichen Satz zugeordnet ist, Zugang zu einer Ressource zu gewähren, die der Berechtigung zugeordnet ist, und wobei das interaktive Assistenzmodul (56) über eine vorher erteilte Berechtigung verfügt, dem einen oder mehreren anderen Benutzern Zugang zu der gegebenen Ressource zu gewähren;
Vergleichen, durch das interaktive Assistenzmodul (56), des einen oder der mehreren Attribute der ersten Beziehung mit dem einen oder den mehreren Attributen der einen oder mehreren anderen Beziehungen; und
basierend auf dem Vergleichen, Bereitstellen, durch das interaktive Assistenzmodul (56), des ersten Benutzerzugriffs auf die angegebene Ressource.

## Revendications

1. Procédé mis en œuvre par ordinateur, comprenant :
la réception, par un module assistant interactif (56) exploité par un ou plusieurs processeurs, d'une demande par un premier utilisateur d'accéder à une ressource donnée contrôlée par un deuxième utilisateur, dans lequel le module assistant interactif n'a pas d'autorisation préalable de fournir au premier utilisateur un accès à la ressource donnée ;
la détermination, par le module assistant interactif (56), d'un ou plusieurs attributs d'une première relation entre les premier et deuxième utilisateurs, de tels attributs comprenant un premier ensemble d'une ou plusieurs autorisations associées au premier utilisateur, dans lequel chaque autorisation du premier ensemble permet au module assistant interactif (56) de fournir au premier utilisateur un accès à une ressource contrôlée par le deuxième utilisateur ;
la détermination, par le module assistant interactif (56), d'un ou plusieurs attributs d'une ou plusieurs autres relations entre le deuxième utilisateur et un ou plusieurs autres utilisateurs, de tels attributs comprenant un ou plusieurs ensembles supplémentaires d'une ou plusieurs autorisations associées à l'utilisateur ou aux autres utilisateurs, dans lequel chaque ensemble du ou des ensembles supplémentaires est associé à un utilisateur différent du ou des autres utilisateurs, dans lequel chaque autorisation de chaque ensemble supplémentaire permet au module assistant interactif (56) de fournir à un utilisateur associé à l'ensemble supplémentaire un accès à une ressource associée à l'autorisation, et dans lequel le module assistant interactif (56) a une autorisation préalable de fournir à l'utilisateur ou aux autres utilisateurs un accès à la ressource donnée ;
la comparaison, par le module assistant interactif (56), du ou des attributs de la première relation avec le ou les attributs de la ou des autres relations ;
la supposition conditionnelle, par le module assistant interactif (56), sur base de la comparaison, de l'autorisation de fournir au premier utilisateur un accès à la ressource donnée ; et
sur base au moins en partie de la supposition conditionnelle, la fourniture, par le module assistant interactif (56), du premier accès utilisateur à la ressource donnée.

2. Procédé mis en œuvre par ordinateur selon la revendication 1, dans lequel au moins une autorisation du premier ensemble ou un ou plusieurs des ensembles supplémentaires est associé à une application tierce.

3. Procédé mis en œuvre par ordinateur selon l'une quelconque des revendications précédentes, comprenant en outre la fourniture, par le module assistant interactif (56), via un ou plusieurs dispositifs de sortie (24), sollicitant la sortie du deuxième utilisateur pour une autorisation de fournir au premier utilisateur un accès à la ressource donnée, dans lequel l'accès à la ressource donnée est en outre fourni sur base d'une réponse à la sollicitation, dans lequel la réponse est fournie par le deuxième utilisateur.

4. Procédé mis en œuvre par ordinateur selon l'une quelconque des revendications précédentes, dans lequel l'accès à la donnée est en outre fourni sur base d'un niveau de sensibilité de la ressource donnée.

5. Procédé mis en œuvre par ordinateur selon l'une quelconque des revendications précédentes, dans lequel la ressource donnée comprend un canal de communication vocale entre le premier utilisateur et le deuxième utilisateur.

6. Procédé mis en œuvre par ordinateur selon l'une quelconque des revendications précédentes, dans lequel la détermination du ou des attributs de la première relation et de la ou des autres relations comprend :
la formation d'une pluralité de vecteurs de caractéristiques qui représentent des attributs du premier utilisateur, du deuxième utilisateur et du ou des autres utilisateurs ; et
la détermination de distances entre au moins certains de la pluralité de vecteurs de caractéristiques à l'aide d'un ou de plusieurs modèles d'apprentissage automatiques ;
dans lequel une distance entre une quelconque paire donnée de la pluralité de vecteurs de caractéristiques représente une relation entre deux utilisateurs représentés par la paire donnée de vecteurs de caractéristiques.

7. Système comprenant un ou plusieurs processeurs (12) et une mémoire (16) couplés de manière opérationnelle avec le ou les processeurs (12), dans lequel la mémoire stocke des instructions qui : en réponse à l'exécution des instructions par le ou les processeurs (12), amènent le ou les processeurs (12) à exploiter un module assistant interactif (56) configuré pour :
recevoir une demande par un premier utilisateur d'accès à une ressource donnée contrôlée par un deuxième utilisateur, dans lequel le module assistant interactif (56) n'a pas d'autorisation préalable de fournir au premier utilisateur un accès à la ressource donnée ;
déterminer un niveau de confiance associé au premier utilisateur, dans lequel le niveau de confiance est déduit par le module assistant interactif (56) sur base d'un ou plusieurs attributs d'une relation entre les premier et deuxième utilisateurs, de tels attributs comprenant un premier ensemble d'une ou plusieurs autorisations associées au premier utilisateur, dans lequel chaque autorisation du premier ensemble permet au module assistant interactif (56) de fournir au premier utilisateur un accès à une ressource contrôlée par le deuxième utilisateur ;
identifier un ou plusieurs critères régissant des ressources contrôlées par le deuxième utilisateur qui sont accessibles à d'autres utilisateurs associés au niveau de confiance ; et
fournir au premier utilisateur un accès à la ressource donnée en réponse à une détermination que la demande satisfait au ou aux critères.

8. Système selon la revendication 7, dans lequel le niveau de confiance associé au premier utilisateur est déduit sur base d'un premier ensemble d'une ou plusieurs autorisations associées au premier utilisateur, dans lequel chaque autorisation du premier ensemble permet au module assistant interactif (56) de fournir au premier utilisateur un accès à une ressource contrôlée par le deuxième utilisateur.

9. Système selon la revendication 8, dans lequel le niveau de confiance associé au premier utilisateur est en outre déduit sur base d'un ou plusieurs ensembles supplémentaires d'une ou plusieurs autorisations associées à un ou plusieurs autres utilisateurs, dans lequel le module assistant interactif (56) a une autorisation préalable de fournir au ou aux autres utilisateurs un accès à la ressource donnée, et dans lequel chaque ensemble du ou des ensembles supplémentaires est associé à un utilisateur différent du ou des autres utilisateurs.

10. Système selon la revendication 9, dans lequel chaque autorisation de chaque ensemble supplémentaire permet au module assistant interactif (56) de fournir à un utilisateur associé à l'ensemble supplémentaire un accès à une ressource associée à l'autorisation.

11. Système selon la revendication 10, dans lequel au moins une autorisation du premier ensemble ou du ou des ensembles supplémentaires est associée à une application tierce.

12. Système selon l'une quelconque des revendications 7 à 11, comprenant en outre des instructions pour amener le module assistant interactif (56) à fournir, via un ou plusieurs dispositifs de sortie (24), sollicitant la sortie du deuxième utilisateur pour une autorisation de fournir au premier utilisateur un accès à la ressource donnée, dans lequel le ou les critères comprennent une réponse à la sollicitation, fournie par le deuxième utilisateur.

13. Système selon l'une quelconque des revendications 7 à 12, dans lequel la ressource donnée comprend des données contrôlées par le deuxième utilisateur.

14. Système selon l'une quelconque des revendications 7 à 13, dans lequel la ressource donnée comprend un canal de communication vocale entre le premier utilisateur et le deuxième utilisateur.

15. Au moins un support lisible par ordinateur non transitoire comprenant des instructions qui, en réponse à l'exécution des instructions par un ou plusieurs processeurs (12), amènent le ou les processeurs (12) à réaliser les opérations suivantes :
la réception, par un module assistant interactif (56) exploité par un ou plusieurs processeurs, d'une demande par un premier utilisateur d'accès à une ressource donnée contrôlée par un deuxième utilisateur, dans lequel le module assistant interactif n'a pas d'autorisation préalable de fournir au premier utilisateur un accès à la ressource donnée ;
la détermination, par le module assistant interactif (56), d'un ou plusieurs attributs d'une première relation entre les premier et deuxième utilisateurs, de tels attributs comprenant un premier ensemble d'une ou plusieurs autorisations associées au premier utilisateur, dans lequel chaque autorisation du premier ensemble permet au module assistant interactif (56) de fournir au premier utilisateur un accès à une ressource contrôlée par le deuxième utilisateur ;
la détermination, par le module assistant interactif (56), d'un ou plusieurs attributs d'une ou plusieurs autres relations entre le deuxième utilisateur et un ou plusieurs autres utilisateurs, de tels attributs comprenant un ou plusieurs ensembles supplémentaires d'une ou plusieurs autorisations associées à l'utilisateur ou aux autres utilisateurs, dans lequel chaque ensemble du ou des ensembles supplémentaires est associé à un utilisateur différent du ou des autres utilisateurs, dans lequel chaque autorisation de chaque ensemble supplémentaire permet au module assistant interactif (56) de fournir à un utilisateur associé à l'ensemble supplémentaire un accès à une ressource associée à l'autorisation, et dans lequel le module assistant interactif (56) a une autorisation préalable de fournir à l'utilisateur ou aux autres utilisateurs un accès à la ressource donnée ;
la comparaison, par le module assistant interactif (56), du ou des attributs de la première relation avec le ou les attributs de la ou des autres relations ; et
sur base de la comparaison, la fourniture, par le module assistant interactif (56), au premier utilisateur d'un accès à la ressource donnée.
